# DEMANDE DE BREVET EUROPEEN

(11) **EP 0 692 414 A1**
(43) Date de publication de la demande: **17.01.1996**
(21) Numéro de dépôt: 95110717.6
(22) Date de dépôt: 10.07.1995
(51) Int. Cl.: B60S 1/34

(54) **Dispositif de lave-glace, notamment pour véhicule automobile**

(30) Priorité: 13.07.1994 FR 9408833
(71) Demandeur: VALEO SYSTEMES D'ESSUYAGE, F-78321 La Verriere (FR)
(72) Inventeur: Hommelet, Stéphanie, F-86100 Chatellerault (FR)
(74) Mandataire: Gamonal, Didier

(57) **Abrégé**

Un dispositif de lave-glace, notamment pour surface vitrée de véhicule automobile, comporte un arbre (10) portant un canal (16), ledit arbre étant porté par un carter (1) de moto-réducteur et étant soumis à un mouvement de rotation alternatif par l'intermédiaire d'un élément menant (9, 11a, 11b), et dont une extrémité (20, 22) pénètre à étanchéité dans un alésage (35a, 35b) d'une pièce de raccordement (18) à une conduite souple venant d'un circuit de lave-glace.

Selon l'invention, la pièce de raccordement (18) et l'extrémité (20) de l'arbre (10) sont liées en rotation par des moyens à coopération de forme (21), et l'arbre (10) comporte, à son extrémité pénétrant dans la pièce de raccordement (18), une partie sphérique (22) apte à déformer radialement vers l'extérieur l'alésage (35b) de ladite pièce de raccordement.

## Description

La présente invention se rapporte à un dispositif de lave-glace, notamment pour véhicule automobile.

On a déjà proposé des dispositifs de lave-glace comportant un groupe de commande, comme un moto-réducteur constitué d'un moteur électrique associé à un ensemble réducteur permettant de générer à un arbre de sortie lié à ce moto-réducteur, un mouvement de rotation alternatif.

Cet arbre de sortie est généralement relié soit directement, soit indirectement tel que par un mécanisme à bielle d'entraînement, à un bras d'essuie-glace.

Comme cela est connu, notamment par le document FR-A-2 497 745, l'arbre de sortie comporte un alésage débouchant aux deux extrémités de l'arbre, l'une des extrémités étant reliée à un dispositif de projection d'un liquide de lave-glace sur une surface vitrée, telle qu'un pare-brise de véhicule automobile, et l'autre extrémité débouchant axialement à l'intérieur d'une pièce de raccordement fixe, en forme de pot, et présentant une tubulure d'admission, raccordée par une conduite souple à un bocal de lave-glace par l'intermédiaire d'une pompe de lave-glace.

Dans de tels dispositifs, il bien entendu important d'assurer l'étanchéité de la liaison entre l'arbre de sortie tournant et la pièce de raccordement en forme de pot qui est généralement reliée de manière fixe au couvercle de fermeture du carter du moto-réducteur.

Selon le document précité, l'arbre de sortie traverse une première bague d'étanchéité portée par le couvercle de fermeture et permettant d'empêcher que le lubrifiant présent dans l'ensemble réducteur ne pénètre dans la pièce de raccordement en forme de pot, et cet arbre de sortie porte également dans une rainure prévue à son extrémité pénétrant dans le pot une deuxième bague d'étanchéité permettant d'assurer l'étanchéité entre le liquide de lave-glace pénétrant dans celui-ci et ledit arbre.

Ce dispositif présente cependant certains inconvénients pouvant entraver gravement son fonctionnement.

En effet, lors du montage, le couvercle de fermeture portant la première bague d'étanchéité et la pièce de raccordement en forme de pot, vient coiffer l'extrémité de l'arbre de sortie portant la deuxième bague d'étanchéité.

Lors de ce mouvement, les deux bagues d'étanchéité viennent en contact l'une avec l'autre et il se peut que l'une des deux bagues se démonte sous l'action de l'autre, sans que l'opérateur réalisant le montage ne puisse constater ce démontage. De graves problèmes d'étanchéité peuvent alors apparaître dans le dispositif risquant d'en altérer son fonctionnement.

Pour remédier à ces inconvénients, il a déjà été proposé dans une précédente demande du déposant, le document FR-A-2 674 489, d'assurer l'étanchéité entre l'arbre de sortie et la pièce de raccordement en forme de pot grâce à deux bagues d' étanchéité logées à distances l'une de l'autre dans ledit pot et supportées par une pièce de support elle-même logée dans le pot.

Ce dispositif, s'il assure de manière fiable une très bonne étanchéité, présente cependant l'inconvénient de comprendre de nombreuses pièces et d'être de ce fait assez coûteux à réaliser.

La présente invention se propose donc de remédier à ce problème en présentant un dispositif de lave-glace très simple, comprenant un minimum de pièce tout en assurant une étanchéité parfaite.

Selon la présente invention, un dispositif de lave-glace, notamment pour surface vitrée de véhicule automobile, comportant un arbre portant un canal, ledit arbre étant porté par un carter de moto-réducteur et étant soumis à un mouvement de rotation alternatif par l'intermédiaire d'un élément menant, et dont une extrémité pénètre à étanchéité dans un alésage d'une pièce de raccordement à une conduite souple venant d'un circuit de lave-glace est caractérisé en ce que la pièce de raccordement et l'extrémité de l'arbre sont liées en rotation par des moyens à coopération de forme, et en ce que l'arbre comporte, à son extrémité pénétrant dans la pièce de raccordement, une partie sphérique apte à déformer radialement vers l'extérieur l'alésage de ladite pièce de raccordement.

Grâce à l'invention, une seule pièce de raccordement est nécessaire ce qui limite les coûts.

De plus, grâce à la déformation engendrée par la partie sphérique, un contact intime s'établit entre ladite partie sphérique de l'extrémité de l'arbre et l'alésage de ladite pièce de raccordement, ce qui assure l'étanchéité du système entre la pièce de raccordement et l'arbre. L'étanchéité du système est donc assurée sans ajouter de pièce supplémentaire comme des joints.

Selon une autre caractéristique de l'invention, le moyen de liaison à coopération de forme est constitué par une saillie située à l'extrémité dudit arbre et apte à s'insérer dans l'alésage de ladite pièce de raccordement.

Selon une autre caractéristique de l'invention, le moyen de liaison en rotation entre l'arbre et la pièce de raccordement est constitué par un moletage situé à l'extrémité dudit arbre et apte à s'insérer dans l'alésage de ladite pièce de raccordement.

Ainsi, lors du montage de la pièce de raccordement sur l'extrémité de l'arbre du dispositif, ladite pièce de raccordement peut être présentée, en vis à vis de ladite extrémité, avec une position angulaire quelconque ce qui permet de choisir l'indexation angulaire la plus appropriée pour le raccordement au circuit de lave-glace.

Selon une autre caractéristique de l'invention, l'alésage comporte une première partie tubulaire apte à recevoir l'extrémité moletée de l'arbre et une deuxième partie tubulaire apte à recevoir l'extrémité sphérique dudit arbre.

Selon une autre caractéristique de l'invention, la première partie tubulaire présente un diamètre différent de celui de la deuxième partie tubulaire.

Selon une autre caractéristique de l'invention, le dispositif de lave-glace, dans lequel le carter comporte une plaque de fermeture apte à être traversée par l'arbre, est caractérisé en ce que la plaque de fermeture porte une rondelle surmoulée entourant le voisinage de l'extrémité de l'arbre, et en ce que la pièce de raccordement comporte une collerette radiale venant recouvrir au moins partiellement ladite rondelle de manière à assurer l'étanchéité à la graisse et à la poussière dudit dispositif.

Selon une autre caractéristique de l'invention, la collerette radiale comporte une bordure en saillie ceinturant ladite rondelle.

Selon un autre aspect de l'invention, le dispositif dans lequel le carter est fermé par un boîtier électronique faisant office de plaque de fermeture dudit carter, ledit boîtier électronique comportant une plaque de fermeture, est caractérisé en ce que l'arbre traverse le boîtier électronique par un alésage, en ce que ledit boîtier électronique présente une saillie axiale entourant le voisinage de l'extrémité de l'arbre, et en ce que la pièce de raccordement comporte une collerette radiale venant recouvrir au moins partiellement ladite saillie de manière à interdire l'introduction d'impuretés dans le dispositif.

Selon une autre caractéristique de l'invention, l'arbre traverse ledit boîtier électronique par un alésage et la plaque de fermeture par un autre alésage, ladite plaque de fermeture présente une saillie axiale entourant le voisinage de l'extrémité de l'arbre, et la pièce de raccordement comporte une collerette radiale venant recouvrir au moins partiellement ladite saillie de manière à interdire l'introduction d'impuretés dans le dispositif.

Grâce à ce dispositif, l'étanchéité est renforcée par le fait qu'elle est assurée à l'extérieur du boîtier électronique, ce qui offre une meilleure protection des composants électroniques fragiles présents dans ledit boîtier.

L'invention porte également sur un procédé de montage d'un dispositif de lave-glace, caractérisé en ce qu'il comporte les étapes suivantes:
- la pièce de raccordement comportant un alésage dont la paroi latérale est lisse est présentée en vis à vis de l'extrémité de l'arbre;
- dans un mouvement axial, ladite pièce de raccordement pénètre dans l'alésage de manière à ce que l'extrémité moletée de l'arbre vienne creuser des rainures de forme complémentaire dans ledit alésage, et à ce que la partie sphérique de l'extrémité de l'arbre vienne déformer radialement vers l'extérieur ledit alésage.

D'autres caractéristiques et avantages apparaîtront à la lecture de la description suivante en se référant aux dessins annexés parmi lesquels:
- la figure 1 est une vue en coupe d'un dispositif de lave-glace selon la présente invention;
- la figure 2 est une vue en coupe agrandie d'un détail de la figure 1;
- la figure 3 est une vue en coupe d'un dispositif de lave-glace selon une variante de l'invention.

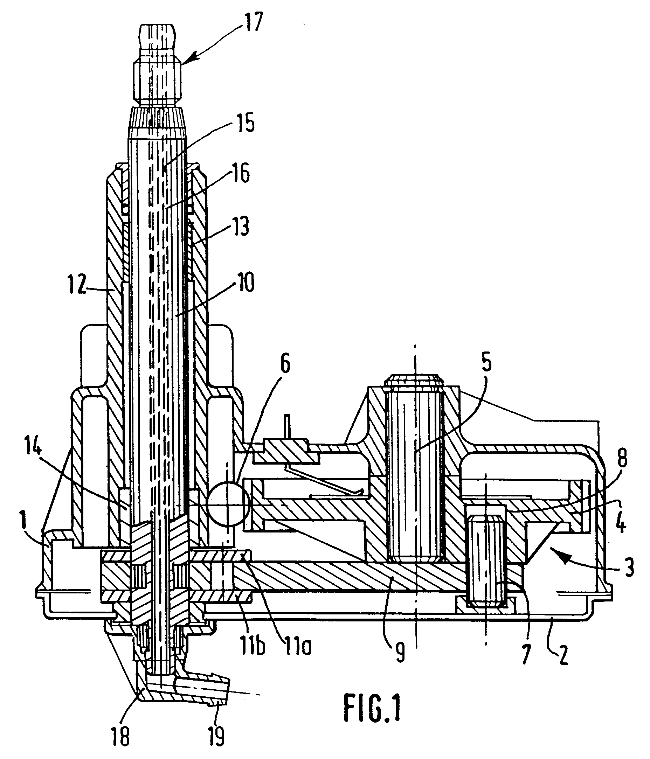

Sur la figure 1, on a représenté un ensemble moto-réducteur constitué d'un moteur électrique non représenté et d'un réducteur enfermé dans un carter 1 fermé par une plaque de fermeture 2.

Ce carter contient un système de réduction 3, constitué de manière connue d'une roue dentée 4, mobile en rotation autour d'un axe 5 et entraînée par une vis sans fin 6 issue du rotor du moteur électrique.

La roue 4 porte un pion 7, parallèle à l'axe 5 et sensiblement excentré par rapport à celui-ci, monté libre en rotation dans un logement 8 de la roue 4.

Le pion 7 est relié à un système bielle-manivelle composé classiquement d'un bras 9 formant bielle relié à l'une de ses extrémités au pion 7 et présentant à l'autre extrémité un secteur denté qui s'engrène avec un autre secteur denté, lié de manière fixe à l'arbre de sortie 10.

Les deux secteurs dentés sont maintenus constamment en prise grâce à deux balanciers 11a et 11b, situés de part et d'autre des faces longitudinales desdits secteurs dentés en permettant de relier rigidement le bras 9 et l'arbre de sortie 10. Ainsi, ledit système bielle-manivelle permet de transformer le mouvement de rotation de la roue 4 en mouvement de rotation alternatif à l'arbre de sortie 10.

Ledit arbre de sortie 10 est logé dans un fût 12 situé au fond du carter 1 en reposant sur deux paliers 13 et 14.

Cet arbre de sortie est percé d'un alésage 15, ledit alésage contenant un tube 16, réalisé préférentiellement en cuivre, et emmanché en force dans ledit alésage.

L'arbre de sortie 10 est relié à l'une 17 de ses extrémités à un bras d'essuie-glace (non représenté) portant un balais d'essuie-glace apte à frotter sur une surface vitrée telle qu'un pare-brise de véhicule automobile, tandis que l'autre de ses extrémités traverse le couvercle de fermeture 2 pour aboutir à l'intérieur d'une pièce de raccordement 18 à un circuit de lave-glace.

Le liquide de lave-glace est propulsé d'un bocal de lave-glace par l'intermédiaire d'une pompe de lave-glace, à travers une conduite souple qui vient se raccorder à une tubulure 19 de la pièce de raccordement 18, puis à travers le canal formé par le tube 16, pour aboutir, à l'embouchure du tube située à proximité du bras d'essuie-glace, à une conduite souple reliée à un gicleur disposé à proximité du pare-brise.

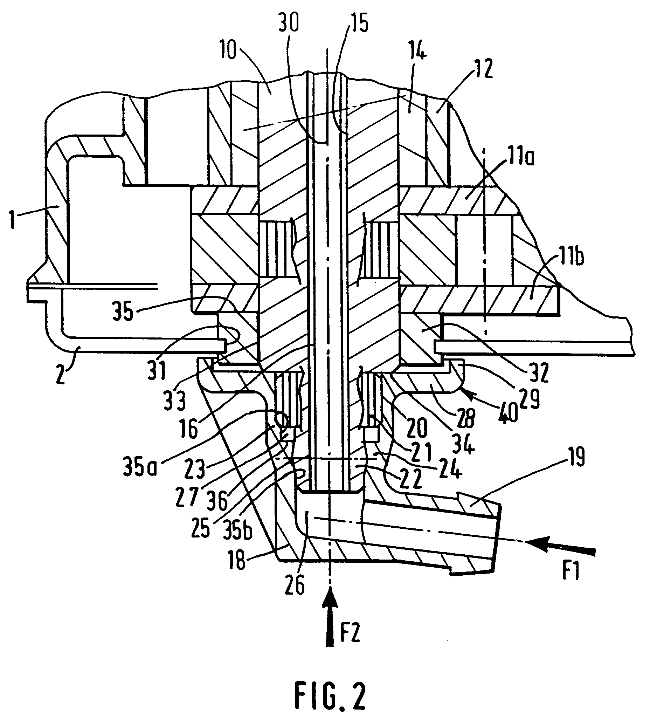

A la figure 2, on a représenté de manière plus précise un mode de réalisation de la présente invention. Les éléments similaires à ceux de la figure 1 portent les mêmes numéros et ne seront pas décrits plus avant.

La flèche F1 représente la direction d'arrivée du liquide de lave-glace provenant du circuit de lave-glace et pénétrant dans la tubulure d'admission 19 de la pièce de raccordement 18.

L'arbre de sortie 10 présente, à son extrémité qui pénètre dans la pièce de raccordement 18, une première partie cylindrique 20, de diamètre inférieur au diamètre extérieur de l'arbre de sortie, et présentant un moletage 21, et une seconde partie de forme générale sphérique 22, située à l'embouchure inférieure du tube 16, celle considérée en bas dans la figure 2, ladite partie sphérique 22 étant de diamètre inférieur à la première partie cylindrique 20.

La pièce de raccordement 18, présentant la forme générale d'un pot, est réalisée préférentiellement en matière plastique. Elle présente un alésage 35a, 35b comportant une première partie tubulaire 23, de diamètre sensiblement inférieur à celui de la partie cylindrique 20 de l'extrémité de l'arbre de sortie, de manière à ce que, lorsque ladite pièce de raccordement est assemblée par emmanchement en force sur l'extrémité de l'arbre de sortie dans la direction de la flèche F2, le moletage 21 de la partie cylindrique 20 s'insère dans la paroi, initialement lisse, de l'alésage 35a de la partie tubulaire 23 pour immobiliser en rotation la pièce de raccordement 18 par rapport à l'arbre de sortie 10.

Cette partie tubulaire 23 se poursuit de manière monobloc en direction axiale et dans la partie inférieure de la pièce de raccordement 18, celle considérée en bas dans la figure 2, par une deuxième partie tubulaire 24, disposée coaxialement avec ladite première partie tubulaire 23, et de diamètre inférieur à cette dite première partie tubulaire, la différence de diamètre entre ces deux parties tubulaires formant un épaulement 36.

L'alésage 35b de cette deuxième partie tubulaire 24 présente un diamètre sensiblement inférieur à celui de la partie sphérique 22 de l'extrémité de l'arbre de sortie 10. De cette façon, lorsque la pièce de raccordement 18 est assemblée par emmanchement en force sur l'extrémité de l'arbre de sortie, la partie sphérique 22 vient déformer radialement vers l'extérieur l'alésage 35b de la deuxième partie tubulaire 24 et cette déformation 25 permet d'immobiliser axialement la pièce de raccordement 18 par rapport à l'arbre de sortie 10.

La pièce de raccordement 18 se prolonge par une tubulure d'admission 19, monobloc avec la deuxième partie tubulaire 24, et s'étendant dans une direction sensiblement perpendiculaire à l'axe 30 de l'arbre de sortie 10, ladite tubulure permettant le raccordement de la cavité 26, située à l'intérieur de la pièce de raccordement, avec un tuyau souple relié , par l'intermédiaire d'une pompe, à un circuit de lave-glace.

L'étanchéité du système, entre la pièce de raccordement 18 et l'arbre de sortie 10, est assurée par la liaison entre la partie sphérique 22 de l'extrémité de l'arbre de sortie et la deuxième partie tubulaire 24 de la pièce de raccordement. En effet, la déformation 25 de l'alésage 35b de la partie tubulaire 24 assure un contact étroit entre la surface extérieure de ladite partie sphérique 22 et la paroi interne de ladite partie tubulaire 24, empêchant tout liquide de passer entre les deux.

Ainsi, le liquide de lave-glace qui pénètre par la tubulure 19 dans la cavité 26, ne peut pas pénétrer dans l'évidement 27 de la première partie tubulaire 23 et risquer ensuite de s'introduire à l'intérieur du carter du moto-réducteur.

L'immobilisation en rotation de la pièce de raccordement 18 avec l'arbre de sortie 10 se fait, comme on l'a vu plus haut, grâce au moletage 21 situé à l'extrémité 20 dudit arbre de sortie. De cette manière la pièce de raccordement 18 a, comme l'arbre de sortie, un mouvement de rotation alternatif.

Cette immobilisation en rotation pourrait également être assurée par un méplat (non représenté) situé sur l'extrémité 20 de l'arbre de sortie et apte à coopérer avec une forme complémentaire (non représentée) de la première partie tubulaire 23 de la pièce de raccordement 18.

Néanmoins, dans ce cas, au moment du montage de la pièce de raccordement 18 sur l'arbre de sortie 10, il faut placer ladite pièce de raccordement dans une position angulaire précise, de manière à ce que le méplat de l'extrémité de l'arbre de sortie et sa forme complémentaire située sur la pièce de raccordement, coïncident parfaitement.

C'est pourquoi selon un mode de réalisation préféré de l'invention, la liaison en rotation entre la pièce de raccordement 18 et l'arbre de sortie 10 se fait par le moletage 21.

Dans ce cas, au moment du montage de la pièce de raccordement 18 sur l'arbre de sortie 10, ladite pièce de raccordement peut être présentée dans une position angulaire quelconque par rapport à l'arbre de sortie, avant d'être emmanchée en force dans la direction de la flèche F2. On pourra donc choisir la position angulaire la plus avantageuse pour le raccordement de la tubulure d'admission 19 avec le tuyau souple provenant du circuit de lave-glace.

Ainsi, la fabrication de dispositifs selon l'invention en grande série sera facilitée par le fait qu'en ayant des pièces identiques, on peut réaliser un montage avec une indexation angulaire de la pièce de raccordement par rapport à l'arbre de sortie spécifique à chaque besoin.

D'autre part, la plaque de fermeture 2 du moto-réducteur est une pièce standard dans laquelle un alésage 31 est pratiqué pour le passage de l'extrémité de l'arbre de sortie débouchant ensuite dans la pièce de raccordement 18.

Cet alésage 31 présente un diamètre supérieur au diamètre extérieur de l'arbre de sortie 10 de manière à ce qu'une rondelle 32, préférentiellement en matière plastique, puisse être surmoulée sur ledit alésage, tout en ménageant un passage pour l'arbre de sortie 10.

Cette rondelle 32 présente un diamètre intérieur sensiblement égal au diamètre extérieur de l'arbre de sortie 10 mais permettant tout de même à ce dernier d'effectuer son mouvement de rotation alternatif sans être freiné par ladite rondelle 32.

La rondelle 32 présente une épaisseur axiale plus importante du côté de la plaque de fermeture dirigé vers l'intérieur du carter du moto-réducteur que du côté situé à l'extérieur. Elle offre ainsi une surface d'appui 35 pour le balancier 11b du système bielle-manivelle et permet d'immobiliser en translation axiale l'arbre de sortie 10.

L'épaisseur axiale de la rondelle 32 du côté de la plaque de fermeture dirigé vers l'extérieur du carter du moto-réducteur est telle que, lorsque l'arbre de sortie 10, muni de son système bielle-manivelle, est engagé dans l'alésage 31 et que le balancier 11b vient prendre appui sur la surface 35 de ladite rondelle surmoulée 32, la partie de l'arbre 10 dépassant axialement de la surface externe de la plaque de fermeture a une dimension axiale supérieure à ladite épaisseur axiale de la rondelle 32.

De plus, le contact annulaire 33 entre ladite rondelle surmoulée 32 et l'arbre de sortie 10 permet d'empêcher que des poussières puissent pénétrer à l'intérieur du carter du moto-réducteur ou que du lubrifiant présent à l'intérieur de l'ensemble réducteur puisse pénétrer dans la pièce de raccordement 18.

Cette étanchéité est renforcée par la collerette radiale 40 de la pièce de raccordement 18.

En effet, la pièce de raccordement 18 présente une collerette radiale 40 composée d'un anneau plat 28, venu de matière avec la partie tubulaire 23 de ladite pièce de raccordement 18, et s'étendant radialement en étant centré sur l'axe de l'arbre de sortie 10 lorsque la pièce de raccordement est montée sur l'arbre de sortie, ledit anneau présentant à sa périphérie une bordure 29 en saillie en direction de la plaque de fermeture. Le diamètre de cet anneau 28 est légèrement supérieur a celui de la rondelle surmoulée 32.

Ainsi, lorsque la pièce de raccordement 18 est montée sur l'arbre de sortie par emmanchement en force, l'anneau 28 de la collerette radiale 40 vient prendre appui sur l'épaulement 34 formé par la différence de diamètre entre l'arbre de sortie 10 et son extrémité 20.

Dans cette disposition, la bordure en saillie 29 de la collerette radiale 40 vient entourer la rondelle surmoulée 32 renforçant ainsi l'étanchéité à la graisse et à la poussière du dispositif.

Ainsi, grâce au dispositif selon l'invention, on dispose d'une pièce de raccordement 18 entre un circuit de lave-glace et un arbre de sortie creux 10 d'un moto-réducteur:
- empêchant le lubrifiant présent dans l'ensemble réducteur de pénétrer dans la pièce de raccordement, étanchéité assurée grâce au contact annulaire 33,
- empêchant des poussières extérieures au dispositif de pénétrer dans le carter dudit réducteur, étanchéité assurée grâce à la collerette radiale 40,
- empêchant le liquide de lave-glace provenant du bocal de lave-glace de pénétrer dans ledit carter, étanchéité assurée grâce à la déformation 25 de la partie tubulaire 24,
- étant d'un coût réduit et d'une grande fiabilité.

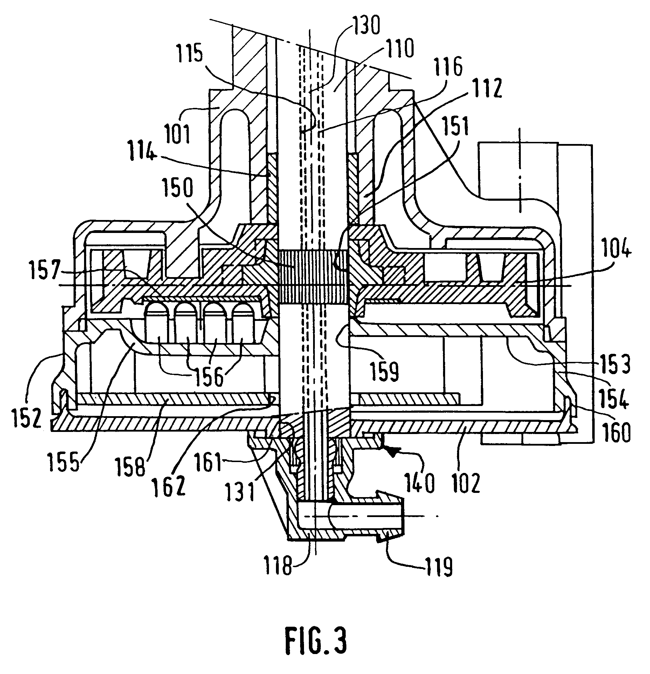

A la figure 3, on a représenté un autre mode de réalisation de l'invention.

Un ensemble moto-réducteur est ici composé d'un moteur (non représenté) et d'un réducteur enfermé dans un carter 101. Le système réducteur est constitué d'une roue dentée 104, mobile en rotation autour d'un axe 130 et entraînée par une vis sans fin (non représentée) issue du rotor du moteur électrique.

L'arbre de sortie 110 du réducteur est logé dans un fût 112 en reposant sur le palier 114.

Dans ce mode de réalisation, la roue dentée 104 est liée en rotation avec l'arbre de sortie 110 du réducteur grâce à un moletage 150, situé sur ledit arbre et apte à s'insérer dans un alésage 151 de ladite roue dentée.

Le carter 101 du réducteur est fermé par un boîtier électronique 152, réalisé préférentiellement en matière plastique et présentant la forme générale d'une cuvette, à fond 153 sensiblement plat et comportant une partie latérale cylindrique 154, s'étendant axialement dans le prolongement du carter 101.

Le boîtier électronique 152 porte, dans un creux 155 situé sur le fond sensiblement plat 153, quatre frotteurs 156, disposés en vis à vis de la roue dentée 104 et aptes à venir frotter sur une plaque métallique 157 fixée sur la surface de ladite roue dentée dirigée vers le boîtier électronique, lesdits frotteurs étant reliés à une carte électronique 158, située à l'intérieur du boîtier électronique.

Ce dispositif permet, de manière connue, de commander la position et le sens de rotation de la roue dentée 104 en commandant les arrêts et les sens de rotation du moteur électrique (non représenté).

Le boîtier électronique 152 est fermé, sur sa partie inférieure en considérant la figure 3, par une plaque de fermeture 102, réalisée préférentiellement en matière plastique et venant se clipper sur des rebords 160 de la partie cylindrique 154 du boîtier électronique.

L'arbre de sortie 110 du réducteur, dont l'axe 130 est confondu avec l'axe de rotation de la roue dentée 104, est percé d'un alésage 115 contenant un tube 116 maintenu dans ledit alésage.

L'arbre de sortie 110 traverse le boîtier électronique 152 par un alésage 159, pratiqué sur le fond sensiblement plat 153 de celui-ci, de diamètre sensiblement égal à celui de l'arbre 110. Ledit arbre traverse la carte électronique 158 par un alésage 162 de celle-ci, de diamètre supérieur à celui de l'arbre 110, de manière à ce que ledit arbre et ladite carte ne soient pas en contact. L'arbre 110 traverse également la plaque de fermeture 102 dudit boitier électronique par un alésage 131 pratiqué sur celle-ci et de diamètre sensiblement égal à celui de l'arbre de sortie 110.

L'extrémité de l'arbre débouche dans une pièce de raccordement 118 à un circuit de lave-glace. Cette pièce de raccordement 118 et l'extrémité de l'arbre 110 ne seront pas décrits plus avant car ils sont similaires à la pièce de raccordement 18 et à l'extrémité 20, 22 de l'arbre 10 décrits à la figure 2.

Au niveau de l'alésage 131 de la plaque de fermeture 102, il existe une saillie axiale 161, dirigée vers l'extérieur du moto-réducteur, venue de matière avec ladite plaque de fermeture, et entourant le voisinage de l'extrémité de l'arbre 110. Elle joue sensiblement le même rôle que la rondelle surmoulée 32 de la figure 2 décrite précédemment, en empêchant des poussières extérieures de pénétrer dans le boîtier électronique.

En effet grâce à cette saillie 161, le contact annulaire entre l'arbre 110 et l'alésage 131 est augmenté dans sa dimension axiale, ce qui rend plus difficile la pénétration des poussières dans ledit boîtier électronique.

Cette étanchéité à la poussière est d'autre part renforcée par la collerette radiale 140 de la pièce de raccordement 118, qui vient entourer ladite saillie 161 lorsque la pièce de raccordement est montée sur l'arbre 110.

D'autre part, l'étanchéité au liquide de lave-glace provenant du circuit de lave-glace et pénétrant dans la pièce de raccordement 118 par la tubulure 119, est assurée par la liaison étroite entre la partie tubulaire de ladite pièce de raccordement 118 et la partie sphérique (non référencée à la figure 3) de l'extrémité de l'arbre de sortie, comme cela a été décrit précédemment pour la figure 2.

Dans cette variante de l'invention, le boîtier électronique 152 comportant, sur la carte 158, des composants électroniques fragiles, est protégé des éventuels risques de micro-fuite pouvant détériorer ladite carte électronique grâce au fait que l'étanchéité est réalisée à l'extérieur du boîtier électronique.

Il est bien entendu que le dispositif ci-dessus décrit n'est aucunement limitatif et pourra donner lieu à toutes modifications désirables sans sortir pour cela du cadre de l'invention.

## Revendications

1. Dispositif de lave-glace, notamment pour surface vitrée de véhicule automobile, comportant un arbre (10, 110) portant un canal (16, 116), ledit arbre étant porté par un carter (1,101) de moto-réducteur et étant soumis à un mouvement de rotation alternatif par l'intermédiaire d'un élément menant (9, 11a, 11b), et dont une extrémité (20, 22) pénètre à étanchéité dans un alésage (35a, 35b) d'une pièce de raccordement (18, 118) à une conduite souple venant d'un circuit de lave-glace, caractérisé en ce que la pièce de raccordement (18, 118) et l'extrémité (20) de l'arbre (10, 110) sont liées en rotation par des moyens à coopération de forme et en ce que l'arbre (10) comporte, à son extrémité pénétrant dans la pièce de raccordement (18), une partie sphérique (22) apte à déformer radialement vers l'extérieur l'alésage (35b) de ladite pièce de raccordement.

2. Dispositif de lave-glace selon la revendication 1, caractérisé en ce que le moyen de liaison à coopération de forme est constitué par une saillie (21) située à l'extrémité (20) dudit arbre et apte à s'insérer dans l'alésage (35a, 35b) de ladite pièce de raccordement (18).

3. Dispositif de lave-glace selon l'une des revendication 1 ou 2, caractérisé en ce que le moyen de liaison en rotation entre l'arbre (10) et la pièce de raccordement (18) est constitué par un moletage (21) situé à l'extrémité (20) dudit arbre et apte à s'insérer dans l'alésage (35a) de ladite pièce de raccordement.

4. Dispositif de lave-glace selon la revendication 3, caractérisé en ce que l'alésage (35a, 35b) comporte une première partie tubulaire (23) apte à recevoir l'extrémité moletée (20) de l'arbre (10) et une deuxième partie tubulaire (24) apte à recevoir l'extrémité sphérique (22) dudit arbre.

5. Dispositif de lave-glace selon la revendication 4, caractérisé en ce que la première partie tubulaire (23) présente un diamètre différent de celui de la deuxième partie tubulaire (24)

6. Dispositif de lave-glace selon l'une des revendications 1 à 3, dans lequel le carter (1), comporte une plaque de fermeture apte à être traversée par l'arbre (10), caractérisé en ce que la plaque de fermeture (2) porte une rondelle surmoulée (32) entourant le voisinage de l'extrémité de l'arbre (10), et en ce que la pièce de raccordement (18) comporte une collerette radiale (40) venant recouvrir au moins partiellement ladite rondelle (32) de manière à assurer l'étanchéité à la graisse et à la poussière dudit dispositif.

7. Dispositif de lave-glace selon la revendication 6, caractérisé en ce que la collerette radiale (40) comporte une bordure en saillie (29) ceinturant la rondelle (32).

8. Dispositif de lave-glace selon l'une des revendications 1 à 3, dans lequel le carter (101) est fermé par un boîtier électronique (152) faisant office de plaque de fermeture, ledit boîtier électronique comportant une plaque de fermeture (102), caractérisé en ce que l'arbre (110) traverse le boîtier électronique (152) par un alésage (159), en ce que ledit boîtier électronique présente une saillie axiale entourant le voisinage de l'extrémité de l'arbre (110), et en ce que la pièce de raccordement (118) comporte une collerette radiale (140) venant recouvrir au moins partiellement ladite saillie de manière à interdire l'introduction d'impuretés dans le dispositif.

9. Dispositif de lave-glace selon la revendication 8, caractérisé en ce que l'arbre (110) traverse le boîtier électronique (152) par un alésage (159) et la plaque de fermeture (102) par un alésage (131), en ce que ladite plaque de fermeture présente une saillie axiale (161) entourant le voisinage de l'extrémité de l'arbre (110), et en ce que la pièce de raccordement (118) comporte une collerette radiale (140) venant recouvrir au moins partiellement ladite saillie (161) de manière à interdire l'introduction d'impuretés dans le dispositif.

10. Procédé de montage d'un dispositif de lave-glace selon l'une des revendications précédentes, caractérisé en ce qu'il comporte les étapes suivantes:
- la pièce de raccordement (18, 118) comportant un alésage (35a, 35b) dont la paroi latérale est lisse est présentée en vis à vis de l'extrémité (20, 22) de l'arbre (10, 110);
- dans un mouvement axial (F2), ladite pièce de raccordement pénètre dans l'alésage (35a, 35b) de manière à ce que l'extrémité moletée (20) de l'arbre (10, 110) vienne creuser des rainures de forme complémentaire dans ledit alésage (35a), et à ce que la partie sphérique (22) de l'extrémité de l'arbre (10, 110) vienne déformer radialement vers l'extérieur ledit alésage (35b).
